# FASCICULE DE BREVET EUROPEEN

(11) **EP 1 102 158 B1**
(45) Date de publication et mention de la délivrance du brevet: **08.08.2012**
(21) Numéro de dépôt: 99123091.3
(22) Date de dépôt: 22.11.1999
(51) Int. Cl.: G06F 1/24, G06F 1/30

(54) **Dispositif et procédé de contrôle de l'état de fonctionnement d'un système électronique en "zone grise"**
Gerät und Verfahren für die Kontrolle des Betriebszustandes eines elektronischen Systems in einem Graubereich
Apparatus and procedure for controlling the operation of an electronic system in a "grey zone"

(43) Date de publication de la demande: 23.05.2001
(73) Titulaire: EM Microelectronic-Marin SA, 2074 Marin (CH)
(72) Inventeur: Divoux, Jean-Noél, 2300 La Chaux-de-Fonds (FR)
(74) Mandataire: Ravenel, Thierry Gérard Louis

(56) Documents cités:
- EP-A- 0 604 270
- WO-A-93/10493
- US-A- 5 539 910

## Description

La présente invention concerne un dispositif de contrôle de l'état de fonctionnement d'un système électronique, en particulier d'un système électronique basse puissance, alimenté par une source d'alimentation en énergie électrique, ce système électronique comprenant notamment un microprocesseur susceptible de fonctionner à un niveau minimal de fonctionnement garanti. Un tel dispositif est en particulier destiné à fournir un signal, dit signal de "reset", maintenant le microprocesseur dans un état déterminé, dit état de "reset", tant que la tension d'alimentation délivrée par la source d'alimentation est inférieure à un niveau de tension déterminé.

La présente invention concerne également un système électronique équipé du dispositif susmentionné ainsi qu'un procédé de contrôle de l'état de fonctionnement d'un tel système électronique.

Par "zone grise", on entendra dans la suite de la présente description, une zone dans laquelle au moins un microprocesseur d'un système électronique est alimenté par une tension d'alimentation dont le niveau est inférieur au niveau de fonctionnement minimal garanti de ce microprocesseur, et dans laquelle le microprocesseur n'est plus dans un état de mise à zéro déterminé, dit état de "reset". On comprendra de ce qui suit, que lorsque un tel microprocesseur se trouve dans cette "zone grise", celui-ci peut potentiellement effectuer des opérations ou exécuter des instructions erronées.

Généralement, pour maintenir le microprocesseur dans un état de "reset" lors de son enclenchement, on prévoit une cellule de mise à zéro sous tension, ou plus communément une cellule "power-on-reset" dont le seuil est supérieur au niveau de fonctionnement minimal garanti auquel peut fonctionner le microprocesseur. On assure ainsi que, lors de l'enclenchement de la source d'alimentation en énergie électrique, le microprocesseur est maintenu dans un état déterminé de "reset" jusqu'à ce que la tension d'alimentation ait atteint un niveau supérieur à son niveau de fonctionnement minimal garanti.

Dans les applications basse puissance, il n'est toutefois pas envisageable d'adopter l'approche susmentionnée, c'est-à-dire utiliser une cellule de mise à zéro sous tension dont le seuil est supérieur au seuil de fonctionnement minimal garanti du microprocesseur. En tenant compte de toutes les dérives en température et des tolérances de fabrication, un seuil de mise à zéro garanti, supérieur au niveau de fonctionnement minimal du microprocesseur serait en règle générale beaucoup trop haut et réduirait considérablement la durée de vie de la source d'alimentation, telle une batterie.

Prenons à titre d'exemple, un système électronique basse puissance alimenté par une source d'énergie électrique de l'ordre de 5 Volts et comprenant un microprocesseur dont le seuil minimal de fonctionnement déterminé est de l'ordre de 1,9 Volts. Un exemple d'un tel système électronique basse puissance est notamment commercialisé par la Demanderesse, la société EM Microelectronic-Marin SA, sous la référence EM6640 "4 bit Microcontroller".

L'approche typique susmentionnée consisterait à utiliser une cellule de mise à zéro sous tension possédant un seuil supérieur au niveau de fonctionnement minimal garanti du microprocesseur, c'est-à-dire un seuil au moins égal à 2 Volts afin de tenir compte des tolérances de fabrication et des variations dues à la température. Cette approche est également utilisée dans la demande de brevet EP 0 604 270 qui en outre, utilise un détecteur de chute de tension afin de comparer une chute de tension de la tension d'alimentation V avec une valeur de chute de tension prédéterminée V1 pour mettre ledit microprocesseur dans un état de "reset" si une chute de la tension d'alimentation V est détectée supérieure à la valeur V1 prédéterminée. Lors de l'enclenchement d'un tel système, on constate alors une diminution drastique de la durée de la vie de la source d'alimentation causée essentiellement par la cellule de mise à zéro sous tension.

Afin de pallier à ce problème, on choisit, selon la présente invention, d'utiliser une cellule de mise à zéro sous tension dont le seuil est bas, ou tout du moins peut devenir plus faible que le niveau de fonctionnement minimal garanti du microprocesseur. Il s'en suit l'apparition de la zone, dite "zone grise", susmentionnée, définie par la plage de tension entre le seuil de la cellule de mise à zéro sous tension et le niveau de fonctionnement minimal garanti du microprocesseur. Dans cette zone, le microprocesseur est susceptible d'exécuter des instructions erronées qui peuvent avoir des conséquences fâcheuses sur le fonctionnement du système. En particulier, des données erronées pouvant servir de code, tel un code de cryptage, pourraient être inscrites dans une mémoire non volatile (EEPROM) du système. Cette approche est également utilisée dans le brevet US 5,539,910 dans lequel un détecteur de tension est associé à un comparateur afin de résoudre le problème susmentionné.

Un objet de la présente invention est ainsi de permettre l'utilisation d'une cellule de mise à zéro sous tension ayant un faible seuil de mise à zéro tout en garantissant que le microprocesseur ne puisse exécuter des instructions lors de son passage en "zone grise" et tout en évitant un passage en "zone grise" lors d'une diminution de la tension d'alimentation.

La présente invention a ainsi pour objet un dispositif de contrôle du fonctionnement d'un système électronique basse puissance dont les caractéristiques sont énoncées dans la revendication 1.

La présente invention a également pour objet un système électronique basse puissance dont les caractéristiques sont énoncées à la revendication 4.

La présente invention a encore pour objet un procédé de contrôle du fonctionnement d'un système électronique basse puissance dont les caractéristiques sont énoncées dans la revendication 5.

Des modes de réalisations avantageux font l'objet des revendications dépendantes.

Un avantage de la présente invention réside dans le fait que la durée de vie de la source d'alimentation est accrue par l'utilisation d'une cellule de mise à zéro sous tension ayant un faible seuil de mise à zéro.

Un autre avantage de la présente invention réside dans le fait que l'on prévient ainsi l'exécution par le microprocesseur d'instructions erronées tant au démarrage du microprocesseur que lorsqu'une chute de tension intervient pendant son fonctionnement.

Encore un autre avantage de la présente invention réside dans le fait que des moyens logiques simples sont employés pour prolonger l'état de "reset" du microprocesseur. Ces moyens logiques peuvent en outre être parfaitement intégrés directement sur le système sans que ceci n'implique un coût de fabrication supplémentaire.

D'autres caractéristiques et avantages de l'invention apparaîtront plus clairement à la lecture de la description détaillée qui suit, faite en référence aux dessins annexés donnés à titre d'exemples non limitatifs et dans lesquels :
- la figure 1 montre un schéma bloc d'un système électronique selon la présente invention comprenant notamment un microprocesseur dont l'état de fonctionnement est contrôlé;
- la figure 2 montre un exemple de réalisation d'un bloc fonctionnel du système électronique de la figure 1 permettant la génération, selon la présente invention, d'un signal de "reset" destiné au microprocesseur; et
- la figure 3 montre un diagramme temporel de l'évolution dans le temps de la tension d'alimentation du système électronique de la figure 1 permettant de mettre en évidence le processus de contrôle de l'état de fonctionnement de ce système électronique.

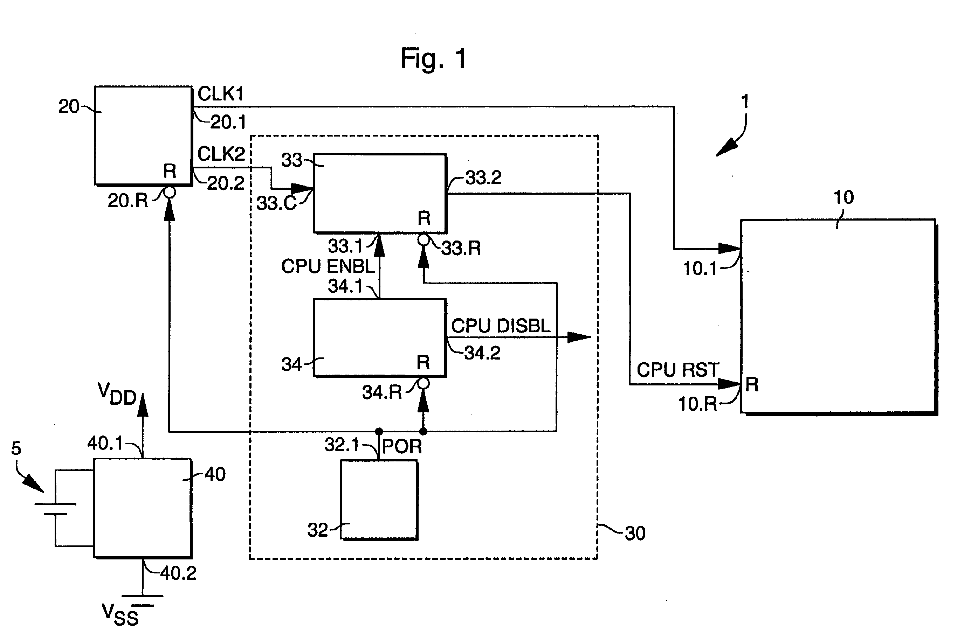

La figure 1 montre un schéma bloc d'un système électronique basse puissance indiqué généralement par la référence numérique 1 constituant une mode de réalisation de la présente invention. Ce système électronique 1 est alimenté par une source d'alimentation en énergie électrique 5. A titre d'illustration, cette source d'alimentation en énergie électrique 5 est typiquement une batterie délivrant une tension d'alimentation basse, à titre d'illustration de l'ordre de 5.5 Volts. Cette source d'alimentation en énergie électrique 5 est connecté à un bloc d'alimentation 40 qui est agencé de manière à fournir, à une première de ses bornes 40.1, une tension d'alimentation V_{DD} référencée par rapport à une tension de masse V_{SS}, définie à une seconde de ses bornes 40.2.

Chaque composant du système électronique 1 comprend ainsi une première borne d'alimentation, non représentée, pour recevoir la tension d'alimentation V_{DD}, et une seconde borne d'alimentation, non représentée, pour recevoir la tension de masse V_{SS}.

Le système électronique 1 illustré à la figure 1 comprend au moins une unité centrale de traitement ou microprocesseur 10 ainsi qu'un ensemble de périphériques, non représentés dans cette figure, comprenant notamment des moyens de mémorisation (ROM, RAM, EEPROM), un port d'entrée et un port de sortie. Le microprocesseur 10 est adapté pour fonctionner correctement à partir d'un niveau de fonctionnement minimal garanti V_{DD,min}. A titre d'illustration, le microprocesseur 10 peut ainsi fonctionner correctement à partir d'un niveau de fonctionnement minimal garanti V_{DD.min} de l'ordre de 1.9 Volts.

Le système électronique 1 comporte en outre une horloge système 20, comprenant par exemple un oscillateur RC, non représenté, agencée pour délivrer au moins un signal d'horloge aux composants du système. L'horloge système 20 comporte ainsi par exemple des sorties 20.1 et 20.2 fournissant chacune un signal d'horloge CLK1, respectivement CLK2. La sortie 20.1 de l'horloge système est ainsi connectée à une entrée ou entrée d'horloge 10.1 du microprocesseur 10.

La fréquence de base du signal d'horloge est par exemple de l'ordre de 600 kHz, mais l'horloge système 20 peut néanmoins fournir des signaux d'horloge à des sous-multiples de la fréquence de base. A cet effet, l'horloge système 20 est ainsi typiquement pourvue d'une chaîne de division, non représentée, permettant de dériver une fréquence désirée à partir de la fréquence de base susmentionnée. En particulier, comme on le verra ci-après, l'horloge système 20 est par exemple agencée pour fournir un signal d'horloge ayant une fréquence de l'ordre de 1 kHz à un bloc fonctionnel 33 du système électronique 1 de la figure 1. Il va de soi que les valeurs numériques de fréquence mentionnées dans la présente description ne le sont qu'à titre d'illustration uniquement.

Le système électronique 1 comporte encore des moyens de mise à zéro indiqués globalement par le traits interrompus et repérés par la référence numérique 30. Ces moyens de mise à zéro 30 assurent en particulier un maintien du microprocesseur 10 dans un état déterminé de "reset". A cet effet, le microprocesseur 10 comporte une entrée de "reset", référencée 10.R, sur laquelle est appliquée un signal logique de "reset" CPU RST. Le microprocesseur 10 est par exemple maintenu à l'état de "reset" tant que le signal CPU RST appliqué sur son entrée de "reset" 10.R est à un niveau logique "haut". Lorsque le signal CPU RST appliqué sur l'entrée de "reset" 10.R passe à un niveau logique "bas", le microprocesseur 10 est alors libéré de son état de "reset".

Plus spécifiquement, les moyens de mise à zéro 30 peuvent être décomposés en deux sous-ensembles. Un premier de ces sous-ensembles est constitué d'une cellule de mise à zéro sous tension 32, plus communément dénommée cellule de "power-on-reset". Un second de ces sous-ensembles est constitué d'un premier et d'un second bloc fonctionnel respectivement repérés par les références numériques 33 et 34, et sur lesquels on reviendra plus en détail dans la suite de la présente description.

La cellule de mise à zéro sous tension 32 est typiquement agencée pour délivrer un signal de "reset" ou plus exactement un signal de mise à zéro sous tension POR dès l'enclenchement du système 1. Cette cellule 32 produit en particulier ce signal de "reset" POR lors d'un changement de la batterie 5, c'est-à-dire dans une situation où la tension d'alimentation V_{DD} du système croît à partir d'un niveau sensiblement nul (à partir de V_{SS}). Plus spécifiquement, cette cellule de mise à zéro sous tension 32 fournit un signal de mise à zéro sous tension POR qui prend un premier niveau logique tant que la tension d'alimentation V_{DD} ne dépasse pas un seuil, dit seuil de mise à zéro sous tension V_{POR}, et qui passe à un second niveau logique dès lors que cette tension d'alimentation V_{DD} dépasse ce seuil de mise à zéro sous tension V_{POR}.

Le signal de "reset" POR est délivré à une sortie 32.1 de la cellule de mise à zéro sous tension 32 sur des entrées de "reset" de divers composants, notamment l'entrée de "reset" 20.R de l'horloge système 20 et les entrées de "reset" 33.R et 34.R des premiers et seconds blocs fonctionnels 33 et 34. Dans la suite de la description, on repérera les entrées de "reset" des divers composants du système par l'indice "R" adjoint à la référence numérique du composant correspondant.

La cellule de mise à zéro sous tension 32 est continuellement alimentée et est agencée de manière à fournir le signal de "reset" POR qui adopte un premier niveau logique, par exemple le niveau logique "bas", tant que la tension d'alimentation V_{DD} de la batterie 5 ne dépasse pas le seuil de mise à zéro sous tension V_{POR} déterminé, et qui adopte un second niveau logique, par exemple le niveau logique "haut", au-delà du seuil de mise à zéro sous tension V_{POR}. Par convention, les divers composants sont mis à zéro ou maintenu à l'état de "reset" lorsqu'on applique un signal de niveau logique "haut" sur leur entrée de "reset". En conséquence, les entrées de "reset" 20.R, 33.R et 34.R de l'horloge système 20 et des deux blocs fonctionnels 33 et 34 sont inversées, comme cela est illustré sur la figure 1, de sorte que les composants correspondants sont mise à zéro tant que le signal de mise à zéro sous tension POR reste au niveau logique "bas".

Selon la présente invention, le seuil de mise à zéro sous tension V_{POR} de la cellule de mise à zéro sous tension 32 est, ou peut être défini faible, et en particulier plus faible que le niveau de fonctionnement minimal garanti V_{DD,min} auquel peut fonctionner correctement le microprocesseur 10. A titre d'illustration, le seuil de mise à zéro sous tension V_{POR} est de l'ordre de 1,5 Volts, soit inférieur au niveau minimal garanti V_{DD,min} de 1,9 Volts cité plus haut également à titre d'illustration.

Conformément à ce qui a déjà été mentionné dans le préambule de la présente description, il apparaît donc une zone, dite "zone grise", entre le seuil de mise à zéro sous tension V_{POR} de la cellule de mise à zéro sous tension 32 au-delà duquel le microprocesseur 10 ne serait plus maintenu dans un état de "reset" par cette seule cellule 32, et le niveau de fonctionnement minimal garanti V_{DD,min} du microprocesseur 10. Dans cette "zone grise", le microprocesseur 10 est ainsi susceptible d'effectuer des opérations erronées, notamment donner des instructions erronées d'écriture dans une mémoire du système, si celui-ci n'est pas maintenu dans un état de "reset". On décrira ainsi, maintenant, comment cette situation est évitée selon la présente invention.

On comprendra de ce qui a été décrit précédemment, que lorsque le signal de "reset" POR délivré par la cellule de mise à zéro sous tension 32 passe du premier au second niveau logique, l'horloge système 20, et les premier et second blocs fonctionnels 33, 34, ainsi que tous les autres composants, non représentés, dont les entrées de "reset" sont connectées sur la cellule de mise à zéro sous tension 32, sont libérés de leur état de "reset" et commencent à fonctionner.

Le premier bloc fonctionnel 33 de la figure 1 est agencé, d'une part, pour retarder la libération de l'état de "reset" du système, et en particulier la libération de l'état de "reset" du microprocesseur 10, durant une période minimale déterminée Δt_{STAB}. Cette période Δt_{STAB} est choisie notamment de manière à permettre une stabilisation de l'oscillateur RC de l'horloge système 20 lorsque celle-ci est activée.

Typiquement cette période Δt_{STAB} est par exemple de l'ordre de 1 ms. On peut donc également qualifier le premier bloc fonctionnel 33 de bloc de temporisation. Ce bloc de temporisation 33 comprend en particulier une entrée d'horloge 33.C connectée à la sortie 20.2 de l'horloge système 20 qui délivre le signal d'horloge CLK2 à une fréquence de par exemple 1kHz. Le signal de "reset" CPU RST du microprocesseur 10 est produit à une sortie 33.2 du bloc de temporisation 33.

Selon la présente invention, ce premier bloc fonctionnel 33 est, d'autre part, agencé pour retarder la libération de l'état de "reset" du microprocesseur 10 tant que la tension d'alimentation V_{DD} délivrée par la batterie n'est pas supérieure au niveau de fonctionnement minimal garanti V_{DD,min} du microprocesseur. A cet effet, le système électronique 1 comporte en outre un second bloc fonctionnel ou bloc de détection, repéré par la référence numérique 34. Ce bloc de détection est agencé pour surveiller la tension d'alimentation V_{DD} délivrée par la batterie 5, et pour fournir au moins un premier signal logique de commande représentatif du niveau de cette tension d'alimentation V_{DD}. En particulier, le bloc de détection 34 est agencé pour fournir, à une première sortie 34.1, un premier signal logique de commande CPU ENBL qui prend un premier niveau logique, par exemple un niveau logique "bas", si la tension d'alimentation V_{DD} est inférieure à un premier seuil de référence déterminé V_{REF1}, et qui prend un second niveau logique, par exemple un niveau logique "haut", si la tension d'alimentation V_{DD} est supérieure au seuil de référence V_{REF1}, Ce premier seuil de référence V_{REF1} est choisi supérieur ou égal au niveau de fonctionnement minimal garanti V_{DD,min} du microprocesseur 10. Ce premier signal de commande CPU ENBL est délivré à une entrée 33.1 du bloc de temporisation 33.

Selon la présente invention, le premier bloc fonctionnel ou bloc de temporisation 33 ne libère ainsi l'état de "reset" du microprocesseur 10, c'est-à-dire fait passer le signal de "reset" CPU RST du niveau logique "haut" au niveau logique "bas", au plus tôt après l'intervalle de temps déterminé Δt_{STAB} permettant la stabilisation de l'oscillateur RC de l'horloge système 20. Si, au terme de cet intervalle de temps déterminé Δt_{STAB}, le bloc de détection 34 indique que la tension d'alimentation V_{DD} n'a pas atteint le seuil de référence V_{REF1} défini supérieur au niveau de fonctionnement minimal garanti V_{DD,min} du microprocesseur 10, la libération de l'état de "reset" n'apparaît alors que lorsque le bloc de détection fournit un signal de commande CPU ENBL de niveau logique "haut".

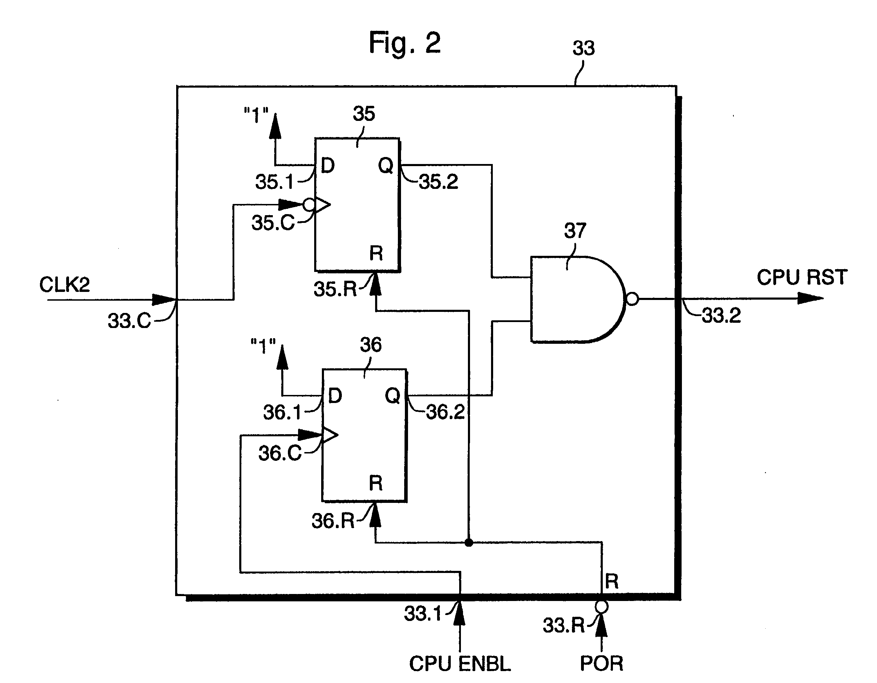

On décrira maintenant au moyen de la figure 2, un exemple de réalisation du bloc de temporisation 33 permettant de réaliser la fonction susmentionnée. Cet exemple est toutefois présenté purement à titre d'illustration et n'est donc pas limitatif. On notera en effet que l'homme du métier dispose de nombreuses solutions logiques alternatives permettant de réaliser cette même fonction.

La figure 2 montre ainsi un exemple d'un bloc de temporisation pouvant être utilisé pour remplir la fonction du bloc de temporisation 33 de la figure 1. Ce bloc de temporisation, également repéré par la référence numérique 33, comprend des première et seconde bascules 35 et 36 comprenant chacune une entrée de d'horloge 35.C, respectivement 36.C, une entrée de "reset" 35.R, respectivement 36.R, une entrée de donnée 35.1, respectivement 36.1, et une sortie 35.2, respectivement 36.2. Le bloc de temporisation 33 comporte encore une porte NAND 37 pourvue de deux entrées connectées respectivement sur les sorties 35.2 et 36.2 des première et seconde bascules 35 et 36, et dont la sortie produit le signal de "reset" CPU RST via la sortie 33.2 du bloc de temporisation 33. Cette porte NAND 37 remplit la fonction logique "NON ET", c'est-à-dire produit à sa sortie un signal de niveau logique "bas" seulement si ses deux entrées sont au niveau logique "haut".

Les entrées de "reset" 35.R et 36.R des bascules 35 et 36 sont connectées ensembles sur l'entrée de "reset" inversée 33.R du bloc de temporisation de sorte que les bascules 35 et 36 sont simultanément mises à zéro lorsque le signal de "reset" POR produit par la cellule de mise à zéro sous tension 32 occupe le niveau logique "bas".

Un signal de niveau logique "haut" est continuellement appliqué sur les entrées de données 35.1 et 36.1 des bascules 35 et 36. Le signal d'horloge CLK2 délivré par l'horloge système 20 à l'entrée d'horloge 33.C du bloc de temporisation 33 est appliquée sur l'entrée d'horloge 35.C de la première bascule 35. Cette entrée d'horloge 35.C est ici inversée. Ceci indique, par convention, que la sortie 35.2 de la bascule 35 passe au niveau logique "haut" qui est appliqué sur l'entrée de donnée 35.1 sur un front descendant du signal d'horloge CLK2. Comme cela a déjà été mentionné plus haut, le signal d'horloge CLK2 a typiquement une fréquence de l'ordre de 1 kHz de sorte que la sortie 35.2 de la première bascule 35 passe au niveau logique "haut" au terme d'une période (Δt_{STAB}) de l'ordre de 1 ms sur un front descendant du signal d'horloge CLK2.

Le signal de commande CPU ENBL émanant du bloc de détection 34 est appliqué via l'entrée 33.1 du bloc de temporisation sur l'entrée d'horloge 36.C de la seconde bascule 36. Cette entrée d'horloge 36.C n'est pas inversée de sorte que la sortie 36.2 de la seconde bascule 35 passe, par convention, au niveau logique "haut" qui est appliqué sur l'entrée de donnée 36.1 sur un front montant du signal d'horloge appliqué sur son entrée d'horloge, c'est-à-dire sur un front montant du signal de commande CPU ENBL.

On aura donc compris que la sortie 35.2, respectivement la sortie 36.2, passe et reste maintenue au niveau logique "haut" dès qu'un front descendant du signal d'horloge CLK2, respectivement un front montant du signal de commande CPU ENBL, apparaît à l'entrée d'horloge 35.C, respectivement l'entrée d'horloge 36.C. Le signal de "reset" CPU RST apparaissant à la sortie de la porte NAND passe ainsi au niveau logique "bas" libérant l'état de "reset" du microprocesseur lorsque les deux sorties 35.2 et 36.2 sont au niveau logique "haut".

Préférablement, le seuil de référence V_{REF1} du bloc de détection 34 est choisi inférieur mais proche de la tension d'alimentation maximale pouvant être délivrée par la source d'alimentation en énergie électrique 5, de sorte que le microprocesseur 10 est maintenu à l'état de "reset" si une source d'alimentation défectueuse ou périmée, telle une batterie usagée, est connectée au système électronique 1. De la sorte on prévient la connexion d'une source d'alimentation usagée dont la tension d'alimentation serait tout juste suffisante pour déclencher l'état de reset du microprocesseur 10 et retomberait rapidement au-dessous du niveau de fonctionnement minimal garanti V_{DD,min}.

A titre de perfectionnement, comme cela est schématisé dans la figure 1, on peut également prévoir que le bloc de détection 34 fournisse, à une autre sortie 34.2, un second signal de commande CPU DISBL qui prend un premier niveau logique, par exemple un niveau logique "bas", si la tension d'alimentation V_{DD} est supérieure à un second seuil de référence déterminé V_{REF2}, et qui prend un second niveau logique, par exemple un niveau logique "haut", si la tension d'alimentation V_{DD} devient inférieure au second seuil de référence V_{REF2}. Ce second seuil de référence V_{REF2} est également choisi supérieur ou égal au niveau de fonctionnement minimal garanti V_{DD,min} du microprocesseur 10.

Ce second seuil de référence V_{REF2} du bloc de détection 34 peut ainsi être choisi proche mais supérieur au niveau de fonctionnement minimal garanti V_{DD,min} de manière à informer le système que la tension d'alimentation V_{DD} délivrée par la batterie a diminué pour atteindre un niveau faible au-dessous duquel le microprocesseur 10 risque à nouveau de rentrer dans la "zone grise". Le second signal de commande CPU DISBL peut ainsi être par exemple utilisé pour forcer le microprocesseur 10 à passer dans un état de "reset" afin de prévenir l'exécution d'instructions erronées en "zone grise".

Dans le cadre de la présente invention, on notera que l'on peut prévoir de manière similaire d'autres seuils de références permettant d'informer le système que la tension d'alimentation VDD a atteint un seuil critique ne permettant pas de garantir le bon fonctionnement d'un composant déterminé du système.

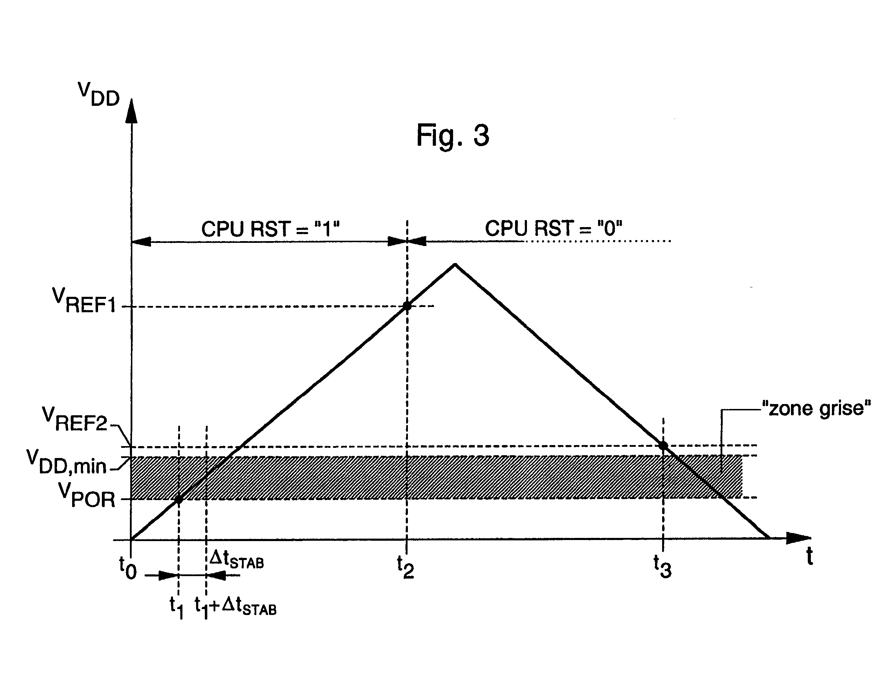

La figure 3 montre un diagramme temporel illustrant le fonctionnement du système de la figure 1 et dans lequel on a représenté l'évolution de la tension d'alimentation V_{DD} délivrée par la batterie, et les différents seuils du système, à savoir le seuil de mise à zéro sous tension V_{POR} de la cellule de mise à zéro sous tension 32, le niveau de fonctionnement minimal garanti V_{DD,min} du microprocesseur 10, et les deux seuils de références V_{REF1} et V_{REF2} du bloc de détection 34. On a également mis en évidence la "zone grise" formée entre le seuil de mise à zéro sous tension V_{POR} et le niveau de fonctionnement minimal garanti V_{DD,min}.

A l'instant t0 dans la figure 2, la tension d'alimentation V_{DD} commence à augmenter et la cellule de mise à zéro sous tension 32 fournit un signal de "reset" POR de niveau logique "bas" et l'horloge système 20, le bloc de temporisation 33 et le bloc de détection 34 sont maintenus à zéro. A ce stade le bloc de temporisation 33 produit donc le signal de "reset" CPU RST de niveau logique "haut" et maintient le microprocesseur 10 à l'état de "reset".

A l'instant t1, la tension d'alimentation V_{DD} atteint le seuil de mise à zéro sous tension de la cellule de mise à zéro sous tension 32 et le signal de "reset" POR de cette dernière passe au niveau logique "haut" de sorte que l'horloge système 20, le bloc de temporisation 33 et le bloc de détection 34 commencent à fonctionner. Le bloc de temporisation 33 fournit toujours à cet instant t1, un signal de "reset" de niveau logique "haut".

A l'instant t1 + Δt_{sTAB} notamment au terme duquel l'oscillateur RC de l'horloge système 20 est stabilisé, le signal de "reset" CPU RST est toujours maintenu par le bloc de temporisation 33 au niveau logique "haut" car le premier seuil de référence V_{REF1} n'a pas encore été atteint par la tension d'alimentation V_{DD}.

A l'instant t2 où la tension d'alimentation V_{DD} atteint le premier seuil de référence V_{REF1} du bloc de détection 34, le signal de commande CPU ENBL passe au niveau logique "haut", et le signal de "reset" CPU RST à la sortie 33.2 du bloc de temporisation 33 passe alors au niveau logique "bas". Le microprocesseur 10 est ainsi libéré de son état de "reset".

Lors d'une diminution de la tension d'alimentation V_{DD} délivrée par la batterie 5, comme cela est illustré dans la deuxième partie du diagramme temporel de la figure 3, le bloc de détection 34 surveille cette tension d'alimentation V_{DD} et fournit, à l'instant t3 indiqué dans la figure 3, un signal de commande CPU DISBL de niveau logique "haut" dès lors que la tension d'alimentation V_{DD} devient inférieure au second seuil de référence V_{REF2}. Comme cela a déjà été mentionné, ce second signal de commande CPU DISBL peut être utilisé pour mettre le microprocesseur 10 à l'état de "reset" afin de prévenir l'exécution d'instructions erronées en "zone grise".

Encore à titre de perfectionnement, on peut prévoir que le bloc de détection 34 fournisse un signal de commande supplémentaire permettant d'activer ou de désactiver un périphérique du microprocesseur 10 selon le niveau de la tension d'alimentation V_{DD} délivrée par la batterie 5. Ainsi, il est envisageable de prévoir que le bloc de détection 34 fournisse également un signal de commande permettant de bloquer ou de permettre une opération d'écriture par le microprocesseur 10 dans une EEPROM du système électronique 1. A ce titre, on pourra s'inspirer de ce qui a été décrit précédemment en rapport au microprocesseur 10 pour commander la logique de contrôle de l'EEPROM.

On comprendra que différentes modifications et/ou adaptations peuvent être apportées au dispositif de contrôle décrit dans la présente description sans sortir du cadre de l'invention défini par les revendications annexées. En particulier, on rappellera que l'homme du métier dispose d'une grande variété de solutions logiques pour remplir la fonction du bloc de temporisation du système électronique selon la présente invention.

## Revendications

1. Dispositif de contrôle de l'état de fonctionnement d'un système électronique basse puissance alimenté par une source d'alimentation en énergie électrique (5), ce système électronique comprenant notamment un microprocesseur (10) susceptible de fonctionner à un niveau de fonctionnement minimal garanti (V_{DD,min}) et une horloge système (20) agencée pour délivrer au moins un signal d'horloge aux composants du système, ce dispositif de contrôle comprenant des moyens de mise à zéro (30) comportant :
- une cellule de mise à zéro sous tension (32) pour fournir un signal de mise à zéro sous tension (POR) maintenant ledit microprocesseur (10) et l'horloge système dans un état de "reset" tant que la tension d'alimentation (V_{DD}) délivrée par ladite source d'alimentation (5) est inférieure à un seuil de la dite cellule, dit seuil de mise à zéro sous tension (V_{POR}) qui est inférieur au dit niveau de fonctionnement minimal garanti (V_{DD,min}) du microprocesseur (10); et
- des premier et second blocs fonctionnels (33, 34) recevant chacun à une entrée de "reset" (33.R, 34. R), le signal de mise à zéro sous tension (POR), et permettant de prolonger ledit état de "reset" du microprocesseur (10) au-delà dudit seuil de mise à zéro sous tension (V_{POR}) tant que la tension d'alimentation (V_{DD}) délivrée par ladite source d'alimentation (5) n'a pas au moins atteint ledit niveau de fonctionnement minimal garanti (V_{DD,min}) du microprocesseur (10),
**caractérisé en ce que** le premier bloc fonctionnel est un bloc de temporisation (33) agencé pour fournir un signal, dit signal de "reset" (CPU RST) au microprocesseur (10) pour maintenir ledit au moins microprocesseur (10) à l'état de "reset" au moins pour un intervalle de temps déterminé (ΔT_{STAB}) sur la base d'un signal d'horloge à fréquence divisée (CLK2) fourni par l'horloge système, dès que la tension d'alimentation dépasse le seuil de mise à zéro sous tension (V_{POR}),
**en ce que** le second bloc fonctionnel est un bloc de détection (34) agencé pour comparer la tension d'alimentation (V_{DD}) délivrée par ladite source d'alimentation (5) à un premier seuil de référence (V_{REF1}) supérieur au dit niveau de fonctionnement minimal garanti (V_{DD, min}) et pour fournir un premier signal logique de commande (CPU ENBL) à une entrée du bloc de temporisation (33), pour que le bloc de temporisation libère l'état de "reset" du microprocesseur (10) quand la tension d'alimentation est supérieure au premier seuil de référence et au plus tôt après l'intervalle de temps déterminé (Δt_{STAB}), ledit microprocesseur (10) étant maintenu à l'état de "reset" tant que la tension d'alimentation (V_{DD}) délivrée par ladite source d'alimentation (5) n'a pas au moins atteint le premier seuil de référence (V_{REF1}), et
**en ce que** ledit bloc de détection (34) est en outre agencé, lors d'une diminution de la tension d'alimentation (V_{DD}) délivrée par ladite source d'alimentation (5) quand le microprocesseur (10) est en fonction, pour comparer la tension d'alimentation (V_{DD}) à un second seuil de référence (V_{REF2}) inférieur au premier seuil de référence et supérieur ou égal au dit niveau de fonctionnement minimal garanti (V_{DD,min}) afin de mettre le microprocesseur (10) dans un état de "reset" par un second signal logique de commande (CPU DISBL), si la tension d'alimentation (V_{DD}) devient inférieure au second seuil de référence (V_{REF2}).

2. Dispositif selon la revendication 1, **caractérisé en ce que** le bloc de temporisation (33) comprend des première et seconde bascules (35, 36), qui comprennent chacune une entrée d'horloge (35.C, 36.C), une entrée de "reset" (35.R, 36. R), une entrée de donnée (35.1, 36.1), et une sortie (35.2, 36.2), **en ce que** les entrées de "reset" (35.R, 36.R) des bascules (35, 36) sont connectées ensembles pour être commandées par le signal de "reset" (POR) de la cellule de mise à zéro sous tension (32), **en ce qu'**un signal de niveau logique "haut" est continuellement appliqué sur les entrées de données (35.1, 36.1) des bascules, **en ce qu'**un signal d'horloge (CLK2) délivré par une horloge système (20) est appliqué sur l'entrée d'horloge (35.C) de la première bascule (35), **en ce que** le premier signal logique de commande (CPU ENBL) du bloc de détection (34) est appliqué sur l'entrée d'horloge (36.C) de la seconde bascule (36), et **en ce que** ledit bloc de temporisation comporte également une porte NAND (37) pourvue de deux entrées connectées respectivement sur les sorties (35.2, 36.2) des première et seconde bascules (35, 36), et dont la sortie produit le signal de "reset" (CPU RST) du bloc de temporisation (33).

3. Dispositif selon l'une quelconque des revendications précédentes, **caractérisé en ce que** ledit dispositif de contrôle est en outre agencé pour contrôler l'état de fonctionnement d'une logique de contrôle d'une mémoire du système électronique.

4. Système électronique basse puissance alimenté par une source d'alimentation en énergie électrique (5) et comprenant notamment un microprocesseur (10) susceptible de fonctionner à un niveau de fonctionnement minimal garanti (V_{DD,min}), **caractérisé en ce qu'**il comprend un dispositif de contrôle de fonctionnement du dit microprocesseur (10) selon l'une quelconque des revendications 1 à 3.

5. Procédé de contrôle de l'état de fonctionnement d'un système électronique basse puissance alimenté par une source d'alimentation en énergie électrique (5), ce système électronique comprenant notamment un microprocesseur (10) susceptible de fonctionner à un niveau de fonctionnement minimal garanti (V_{DD,min}), ce procédé consistant à maintenir ledit microprocesseur (10) dans un état de "reset" tant que la tension d'alimentation (V_{DD}) délivrée par ladite source d'alimentation (5) est inférieure à un seuil de mise à zéro sous tension (V_{POR}) qui est inférieur au dit niveau de fonctionnement minimal garanti (V_{DD,min}), du microprocesseur (10), et à prolonger ledit état de "reset" du microprocesseur (10) au-delà dudit seuil de mise à zéro sous tension (V_{POR}) par des premier et second blocs fonctionnels (33, 34) tant que la tension d'alimentation (V_{DD}) délivrée par ladite source d'alimentation (5) n'a pas au moins atteint ledit niveau de fonctionnement minimal garanti (V_{DD,min}) du microprocesseur (10), lesdits blocs fonctionnels recevant chacun à une entrée de "reset" (33.R, 34.R), le signal de mise à zéro sous tension (POR),
**caractérisé en ce que** le microprocesseur (10) est maintenu à l'état de "reset" au moins pour un intervalle de temps déterminé (Δt_{STAB}) par un signal, dit signal de "reset" (CPU RST) fourni au microprocesseur (10) par le premier bloc fonctionnel, qui est un bloc de temporisation (33) sur la base d'un signal d'horloge à fréquence divisée (CLK2) fourni par l'horloge système (20), dès que la tension d'alimentation dépasse le seuil de mise à zéro sous tension (V_{POR}),
**en ce qu'**une comparaison de la tension d'alimentation (V_{DD}) délivrée par ladite source d'alimentation (5) est effectuée par le second bloc fonctionnel, qui est un bloc de détection (34), par rapport à un premier seuil de référence (V_{REF1}) supérieur au dit niveau de fonctionnement minimal garanti (V_{DD}, ₘᵢₙ), afin de fournir un premier signal logique de commande (CPU ENBL) à une entrée du bloc de temporisation (33), pour que le bloc de temporisation libère l'état de "reset" du microprocesseur (10) quand la tension d'alimentation est supérieure au premier seuil de référence et au plus tôt après l'intervalle de temps déterminé (Δt_{STAB}), ledit microprocesseur (10) étant maintenu à l'état de "reset" tant que la tension d'alimentation (V_{DD}) délivrée par ladite source d'alimentation (5) n'a pas au moins atteint le premier seuil de référence (V_{REF1}), et
**en ce que** l'on place le microprocesseur (10), en fonction, dans un état de "reset" par le bloc de détection (34), dès que la tension d'alimentation (V_{DD}) chute en dessous d'un second seuil de référence (V_{REF2}) d'un niveau inférieur au premier seuil de référence (V_{REF1}) et supérieur ou égal au niveau de fonctionnement minimal garanti (V_{DD}, _{min.}).

## Claims

1. Device for controlling the operating state of a low power electronic system powered by an electric power source (5), this electronic system including in particular a microprocessor (10) able to operate at a guaranteed minimum operating level (V_{DD,min}) and a clock system (20) arranged to supply at least one clock signal to the system components, this controlling device including reset means (30), which comprises :
- a power-on-reset cell (32) for supplying a power-on-reset signal (POR) keeping said microprocessor (10) and the clock system in a reset state as long as the supply voltage (V_{DD}) supplied by said power source (5) is lower than a threshold of said cell, called the power-on-reset threshold (V_{POR}) which is lower than said guaranteed minimum operating level (V_{DD,min}) of the microprocessor (10); and
- first and second operating modules (33, 34) receiving each at a reset input (33.R, 34.R), the power-on-reset signal (POR), and allowing said reset state of the microprocessor (10) to be extended beyond said power-on-reset threshold (V_{POR}) as long as the supply voltage (V_{DD}) supplied by said power source (5) has not at least reached said guaranteed minimum operating level (V_{DD,min}) of the microprocessor (10),
**characterised in that** the first operating module is a time delay operating module (33) arranged to supply a a signal, called a reset signal (CPU RST) to the microprocessor (10) for keeping said at least microprocessor (10) at the reset state at least for a determined time interval (Δt_{STAB}) on the basis of a divided frequency clock signal (CLK2) supplied by the clock system, as soon as the supply voltage exceeds the power-on-reset threshold (V_{POR}),
**in that** the second operating module is a detection module (34) arranged for comparing the supply voltage (V_{DD}) supplied by said power source (5) to a first reference threshold (V_{REF1}) higher than said guaranteed minimum operating level (V_{DD,min}), and for supplying a first logic control signal (CPU ENBL) at an input of the time delay operating module (33), for which the time delay operating module releases the reset state of the microprocessor (10) when the supply voltage is higher than said first reference threshold and at the earliest, after the determined time interval (Δt_{STAB}), said microprocessor (10) being kept at the reset state as long as the supply voltage (V_{DD}) supplied by said power source (5) has not at least reached the first reference threshold (V_{REF1}), and
**in that** said detection module (34) is further arranged when the supply voltage (V_{DD}) supplied by said power source (5) decreases when the microprocessor (10) operates, for comparing the supply voltage (V_{DD}) to a second reference threshold (V_{REF2}) lower than the first reference threshold and higher or equal to said guaranteed minimum operating level (V_{DD,min}), in order to set microprocessor (10) in a reset state by a second logic control signal (CPU DISBL), when the supply voltage (V_{DD}) becomes lower than said second reference threshold (V_{REF2}),

2. Device according to claim 1, **characterised in that** the time delay operating module (33) includes first and second flip-flops (35, 36), which include each a clock input (35.C, 36.C), a reset input (35.R, 36.R), a data input (35.1, 36.1), and an output (35.2, 36.2), **in that** the reset inputs (35. R, 36.R) of the flip-flops (35, 36) are connected together in order to be controlled by the reset signal (POR) of the power-on-reset cell (32), **in that** a "high" logic level signal is continually applied at data inputs (35.1, 36.1) of flip-flops (35, 36), **in that** a clock signal (CLK2) supplied by a clock system (20) is applied at the clock input (35.C) of the first flip-flop (35), **in that** the first logic control signal (CPU ENBL) of the detection module (34) is applied at the clock input (36.C) of the second flip-flop (36), and **in that** the time delay operating module includes a NAND gate (37)
provided with two inputs connected respectively to the outputs (35.2, 36.2) of first and second flip-flops (35, 36), and whose output generates reset signal (CPU RST) of the time delay operating module (33).

3. Device according to any of the preceding claims, **characterised in that** said controlling device is also arranged to check the operating state of a control logic of a memory of the electronic system.

4. Low power electronic system powered by an electric power source (5) and including in particular a microprocessor (10) able to operate at a guaranteed minimum operating level (V_{DD,mn}), **characterised in that** it includes a device for controlling the operation of said microprocessor (10) according to any of claims 1 to 3.

5. Method for controlling the operating state of a low power electronic system powered by an electric power source (5), this electronic system including in particular a microprocessor (10) able to operate at a guaranteed minimum operating level (V_{DD,min}), this method consisting of keeping said microprocessor (10) in a reset state as long as the supply voltage (V_{DD}) supplied by said power source (5) is lower than a power-on-reset threshold (V_{POR}), which is lower than said guaranteed minimum operating level (V_{DD,min}) of the microprocessor (10), and of delaying said reset state of the microprocessor (10) beyond the power-on-reset threshold (V_{POR}) by first and second operating modules (33, 34) as long as the supply voltage (V_{DD}) supplied by said power source (5) has not at least reached said guaranteed minimum operating level (V_{DD,min}) of the microprocessor (10), said operating modules receiving each at a reset input (33.R, 34.R), the power-on-reset signal (POR),
**characterised in that** the microprocessor (10) is kept in the reset state at least for a determined time interval (Δt_{STAB}) by a signal, called a reset signal (CPU RST) supplied to the microprocessor (10) by the first operating module, which is a time delay operating module (33) on the basis of a divided frequency clock signal (CLK2) supplied by the clock system (20), as soon as the supply voltage exceeds the power-on-reset threshold (V_{POR}),
**in that** a comparison of the supply voltage (V_{DD}) supplied by said power source (5) is performed by the second operating module, which is a detection module (34), in relation to a first reference threshold (V_{REF1}) higher than said guaranteed minimum operating level (V_{DD,min}) to supply a first logic control signal (CPU ENBL) at an input of the time delay operating module (33), for which the time delay operating module releases the reset state of the microprocessor (10) when the supply voltage is higher than said first reference threshold and at the earliest, after the determined time interval (Δt_{STAB}), said microprocessor (10) being kept at the reset state as long as the supply voltage (V_{DD}) supplied by said power source (5) has not at least reached the first reference threshold (V_{REF1}), and
**in that** the microprocessor in operation is set in a reset state by the detection module (34), when the supply voltage (V_{DD}) becomes lower than a second reference threshold (V_{REF2}), which has a level lower than the first reference threshold (V_{REF1}) and higher or equal to said guaranteed minimum operating level (V_{DD,min}).

## Patentansprüche

1. Vorrichtung zum Steuern des Funktionszustandes eines elektronischen Systems mit niedriger Leistung, das durch eine Versorgungsquelle (5) mit elektrischer Energie versorgt wird, wobei dieses elektronische System insbesondere einen Mikroprozessor (10), der mit einem garantierten minimalen Funktionspegel (V_{DD,min}) arbeiten kann, und ein Taktsystem (20), das dafür ausgelegt ist, wenigstens ein Taktsignal an die Komponenten des Systems zu liefern, umfasst, wobei diese Steuervorrichtung Null-Rücksetzmittel (30) umfasst, mit:
- einer Zelle (32) zum Setzen auf Null unter Spannung, um ein Signal (POR) zum Setzen auf Null unter Spannung zu liefern, das den Mikroprozessor (10) und das Taktsystem in einem "zurückgesetzten" Zustand hält, solange die Versorgungsspannung (V_{DD}), die von der Versorgungsquelle (5) geliefert wird, kleiner als ein Schwellenwert dieser Zelle ist, der Schwellenwert (V_{POR}) für das Setzen auf Null unter Spannung genannt wird, der kleiner ist als der garantierte minimale Funktionspegel (V_{DD,min}) des Mikroprozessors (10); und
- einem ersten und einem zweiten funktionalen Block (33, 34), die jeweils an einem "Rücksetz"-Eingang (33.R, 34.R) das Signal (POR) zum Setzen auf Null unter Spannung empfangen und ermöglichen, den "Rücksetz"-Zustand des Mikroprozessors (10) über den genannten Schwellenwert (V_{POR}) für das Setzen auf Null unter Spannung solange zu verlängern, bis die Versorgungsspannung (V_{DD}), die von der Versorgungsquelle (5) geliefert wird, nicht wenigstens des garantierten minimalen Funktionspegel (V_{DD,min}) des Mikroprozessors (10) erreicht hat,
**dadurch gekennzeichnet, dass** der erste funktionale Block ein Verzögerungsblock (33) ist, der dafür ausgelegt ist, ein Signal, das "Rücksetz"-Signal (CPU RST) genannt wird, an den Mikroprozessor (10) zu liefern, um wenigstens den Mikroprozessor (10) wenigstens für ein bestimmtes Zeitintervall (Δt_{STAB}) auf der Grundlage eines von dem Taktsystem gelieferten Taktsignals (CLK2) mit geteilter Frequenz in dem "Rücksetz"-Zustand zu halten, sobald die Versorgungsspannung den Schwellenwert (V_{POR}) für das Setzen auf Null unter Spannung übersteigt,
dass der zweite funktionale Block ein Detektionsblock (34) ist, der dafür ausgelegt ist, die von der Versorgungsquelle (5) gelieferte Versorgungsspannung (V_{DD}) mit einem ersten Referenzschwellenwert (V_{REF1}), der größer als der garantierte minimale Funktionspegel (V_{DD,min}) ist, zu vergleichen und ein erstes logisches Steuersignal (CPU ENBL) an einen Eingang des Verzögerungsblocks (33) zu liefern, damit der Verzögerungsblock den "Rücksetz"-Zustand des Mikroprozessors (10) freigibt, wenn die Versorgungsspannung größer als der erste Referenzschwellenwert ist und frühestens nach dem bestimmten Zeitintervall (Δt_{STAB}), wobei der Mikroprozessor (10) in dem "Rücksetz"-Zustand gehalten wird, solange die von der Versorgungsquelle (5) gelieferte Versorgungsspannung (V_{DD}) nicht wenigstens den ersten Referenzschwellenwert (V_{REF1}) erreicht hat, und
dass der Detektionsblock (34) außerdem dafür ausgelegt ist, dann, wenn die von der Versorgungsquelle (5) gelieferte Versorgungsspannung (V_{DD}) abnimmt, wenn der Prozessor (10) arbeitet, die Versorgungsspannung (V_{DD}) mit einem zweiten Referenzschwellenwert (V_{REF2}) zu vergleichen, der kleiner als der erste Referenzschwellenwert und größer oder gleich dem garantierten minimalen Funktionspegel (V_{DD,min}) ist, um den Mikroprozessor (10) durch ein zweites logisches Steuersignal (CPU DISBL) in einen "Rücksetz"-Zustand zu versetzen, falls die Versorgungsspannung (V_{DD}) kleiner wird als der zweite Referenzschwellenwert (V_{REF2}).

2. Vorrichtung nach Anspruch 1, **dadurch gekennzeichnet, dass** der Verzögerungsblock (33) eine erste und eine zweite Kippschaltung (35, 36) umfasst, die jeweils einen Takteingang (35.C, 36.C), einen "Rücksetz"-Eingang (35.R, 36.R), einen Dateneingang (35.1, 36.1) und einen Ausgang (35.2, 36.2) umfassen, dass die "Rücksetz"-Eingänge (35.R, 36.R) der Kippschaltungen (35, 36) miteinander verbunden sind, um durch das "Rücksetz"-Signal (POR) der Zelle (32) zum Setzen auf Null unter Spannung gesteuert zu werden, dass ein Logiksignal mit "hohem" Pegel dauerhaft an die Dateneingänge (35.1, 36.1) der Kippschaltungen angelegt wird, dass ein Taktsignal (CLK2), das von einem Taktsystem (20) geliefert wird, an den Takteingang (35.C) der ersten Kippschaltung (35) angelegt wird, dass das erste logische Steuersignal (CPU ENBL) des Detektionsblocks (34) an den Takteingang (36.C) der zweiten Kippschaltung (36) angelegt wird und dass der Verzögerungsblock außerdem ein NAND-Gatter (37) umfasst, das mit zwei Eingängen versehen ist, die mit den Ausgängen (35.2, 36.2) der ersten bzw. der zweiten Kippschaltung (35, 36) verbunden sind und dessen Ausgang das "Rücksetz"-Signal (CPU RST) des Verzögerungsblocks (33) erzeugt.

3. Vorrichtung nach einem der vorhergehenden Ansprüche, **dadurch gekennzeichnet, dass** die Steuervorrichtung außerdem dafür ausgelegt ist, den Funktionszustand einer Steuerlogik eines Speichers des elektronischen Systems zu steuern.

4. Elektronisches System mit niedriger Leistung, das durch eine Versorgungsquelle (5) mit elektrischer Energie versorgt wird und insbesondere einen Mikroprozessor (10) umfasst, der mit einem garantierten minimalen Funktionspegel (V_{DD,min}) arbeiten kann, **dadurch gekennzeichnet, dass** er eine Vorrichtung für die Steuerung des Betriebs dieses Mikroprozessors (10) nach einem der Ansprüche 1 bis 3 umfasst.

5. Verfahren für die Steuerung des Betriebszustands eines elektronischen Systems mit niedriger Leistung, das durch eine Versorgungsquelle (5) mit elektrischer Energie versorgt wird, wobei dieses elektronische System insbesondere einen Mikroprozessor (10) umfasst, der mit einem garantierten minimalen Funktionspegel (V_{DD,min}) arbeiten kann, wobei dieses Verfahren darin besteht, den Mikroprozessor (10) in einem "Rücksetz"-Zustand solange zu halten, wie die Versorgungsspannung (V_{DD}), die von der Versorgungsquelle (5) geliefert wird, niedriger ist als ein Schwellenwert (V_{POR}) für das Setzen auf Null unter Spannung, der niedriger als dieser garantierte minimale Funktionspegel (V_{DD,min}) des Mikroprozessors (10) ist, und den "Rücksetz"-Zustand des Mikroprozessors (10) über den Schwellenwert (V_{POR}) für das Setzen auf Null unter Spannung hinaus durch einen ersten und einen zweiten funktionalen Block (33, 34) zu verlängern, solange die Versorgungsspannung (V_{DD}), die von der Versorgungsquelle (5) geliefert wird, nicht wenigstens den garantierten minimalen Funktionspegel (V_{DD,min}) des Mikroprozessors (10) erreicht hat, wobei die funktionalen Blöcke jeweils an einem "Rücksetz"-Eingang (33.R, 34.R) das Signal (POR) zum Setzen auf Null unter Spannung empfangen,
**dadurch gekennzeichnet, dass** der Mikroprozessor (10) auf dem "Rücksetz"-Zustand wenigstens für ein bestimmtes Zeitintervall (Δt_{STAB}) durch ein Signal, das "Rücksetz"-Signal (CPU RST) genannt wird und von dem ersten funktionalen Block, der ein Verzögerungsblock (33) auf der Basis eines von dem Taktsystem (20) gelieferten Taktsignals (CLK2) mit geteilter Frequenz ist, zu dem Mikroprozessor (10) geliefert wird, zu halten, sobald die Versorgungsspannung den Schwellenwert (V_{POR}) für das Setzen auf Null unter Spannung übersteigt,
dass ein Vergleich der Versorgungsspannung (V_{DD}), der von der Versorgungsquelle (5) geliefert wird, durch den zweiten funktionalen Block, der ein Detektionsblock (34) ist, in Bezug auf einen ersten Referenzschwellenwert (V_{REF1}), der größer als der garantierte minimale Funktionspegel (V_{DD,min}) ist, ausgeführt wird, um ein erstes logisches Steuersignal (CPU ENBL) an einen Eingang des Verzögerungsblocks (33) zu liefern, damit der Verzögerungsblock den "Rücksetz"-Zustand des Mikroprozessors (10) freigibt, wenn die Versorgungsspannung größer ist als der erste Referenzschwellenwert und frühestens nach dem bestimmten Zeitintervall (Δt_{STAB}), wobei der Mikroprozessor (10) auf dem "Rücksetz"-Zustand solange gehalten wird, wie die von der Versorgungsquelle (5) gelieferte Versorgungsspannung (V_{DD}) nicht wenigstens den ersten Referenzschwellenwert (V_{REF1}) erreicht hat, und
dass der Mikroprozessor (10) in einem "Rücksetz"-Zustand durch den Detektionsblock (34) in Betrieb gesetzt wird, sobald die Versorgungsspannung (V_{DD}) unter einen zweiten Referenzschwellenwert (V_{REF2}) mit einem Pegel, der niedriger als der erste Referenzschwellenwert (V_{REF1}) und größer oder gleich dem garantierten minimalen Funktionspegel (V_{DD,min}) ist, fällt.
